# EUROPEAN PATENT APPLICATION

(11) **EP 4 095 636 A2**
(43) Date of publication of application: **30.11.2022**
(21) Application number: 22174955.9
(22) Date of filing: 23.05.2022
(51) Int. Cl.: G05B 23/02, G05B 19/18

(54) **PATTERN RECOGNITION FOR PART MANUFACTURING PROCESSES**

(30) Priority: 23.05.2021 US 202163192039 P
(71) Applicant: 3D Signals, 4442537 Kfar Saba (IL)
(72) Inventor: OSOKIN, Yuri, Rosh Haayin (IL); SOFFER, Menashe, Raanana (IL); KOREN, David, Hofit (IL); ROSENFELD, Ariel, Kfar Saba (IL); ROVSHITZ, Aviv, Alfei Menashe (IL); HADAD, Eden, Tzofim (IL); AFFIAS, Ofer, Hod Hasharon (IL); POMERANTZ, Itzhak, Kefar Sava (IL); TEICHER, Mordechai, Kfar Saba (IL); KIRSON, Beny, Hod Hasharon (IL)
(74) Representative: Harrison IP Limited

(57) **Abstract**

A method for identifying parts manufactured by a workstation by measuring signals generated by machines in the workstation, extracting features from the signals, clustering the features into clusters, associating clusters with manufactured parts and recognizing the parts through the clusters.

## Description

### Field

The present invention relates to electric machines, and in particular to computer numerical control (CNC) machining centers, feature extraction, clustering and recognition of parts manufactured by industrial machines.

### Background

Industrial production floors are typically divided into individual manufacturing machining centers and workstations, each machining center and workstation repeatedly manufacturing a large number of individual parts with a variety of part types.

The efficiency of a manufacturing facility is dependent, among other things, on the productivity of the individual machining centers and workstations, on their consumption of power and consumables and on the duration of manufacturing a given part.

Such properties of the manufacturing process can be monitored by special staff personnel inspecting the machines or observing using close-circuit TV. Additional methods of monitoring progress can require the installation of hardware and/or software components in the machines to record their operation.

However, such methods can be costly, if they require human resources, and invasive, if they require installing hardware or software components. They also can interfere with machine operation, even cause failures, and sometimes even invalidate the warranties of the machines.

Thus, it has become very much desirable to have a system that can monitor and evaluate the efficiency and productivity of a production floor without requiring intrusive monitoring components to be installed in the machines or requiring dedicated human staffing to perform the monitoring.

Unfortunately, such a system is not available.

### Definitions

The following are definitions of terminology used herein.

Part - a product, or a component of the product, manufactured in an industrial production floor.

Workstation - an area in a production floor where one or more machines are involved in the manufacturing of parts. Typically, a workstation is used to manufacture a variety of types of parts, and typically there is a plurality of identical parts of each type manufactured.

Machine - a device that is electrically powered and is involved in the manufacturing of parts. Examples of machines include stand-alone motors, milling machines, welding machines, lathes, and UV curing lamps. A machine may be a motor or have one or more motors.

Motor - a machine that uses electric power to rotate a shaft. Motors can be AC or DC motors, and AC motors can be synchronous or asynchronous.

Shift - a period of work under the responsibility of a worker. A shift is typically a few hours long, and workers typically change between shifts.

Session - the period that a workstation is manufacturing a single part. Often, some or all of the machines are inactivated when a session ends and are re-activated when a new session begins.

Sensor - a device that is physically attached to a machine or placed in proximity to a machine and generates an electric signal representing some physical property of the machine such as current, power, voltage, vibration, temperature and radiation relating to the operation of the machine. Sensor data transmission can be wired or wireless.

Manufacturing log (or in short "log") - the set of signals generated by the sensors on the machines of a workstation, representing the sequence of manufacturing a part, that are either received by a processor in real time or recorded for processing at a later time. The log represents the sequence of the manufacturing a single part.

Parameter - a property of one or more of the signals received from the sensors of a workstation, such as starting time, ending time, number of activations, intensity of operation (such as the speed of a motor), correlation with of other signals (such as simultaneous starting or stopping of two or more machines), etc.

Feature - a combination of parameters of a log that are determined by a feature extraction process to be useful for clustering and recognition of parts manufactured by the workstation.

Cluster - a collection of logs that are found to be similar to each other and different from logs in other clusters.

Toolpath - the spatial trajectory of a tool when it cuts into the raw material processed by a machine tool.

### Summary

One preferred embodiment provides systems and functionalities for extracting features of the process of manufacturing a part by analyzing electric currents powering and controlling motors of a CNC machine. The waveforms are measured using current or voltage probes. Such feature extraction may be used for clustering the logs of the manufactured parts so that all the logs related to a given part become members of the same cluster.

Generally speaking, CNC-manufactured parts are manufactured by a tool - usually a cutting tool - guided along a toolpath by a plurality of motors. The toolpath represents the shape of the changing surface of the manufactured part throughout the manufacturing process. Hence, it is useful for characterizing the manufactured part.

The plurality of motors moves the tool and sometimes also the manufactured part along a plurality of degrees of freedom, such as longitudinally along X, Y and Z axes of the machine or rotationally around an axis of the machine. The motors are typically synchronously controlled by the alternating currents powering them, where the toolpath changes in each degree of freedom proportionately to the number of alternating current cycles powering the respective motor.

A "toolpath breakpoint", or simply, "breakpoint", is herein an identifiable point along a degree of freedom of the toolpath. For example, in a machine having a tool moving along X and Y axes, a breakpoint is a "turning breakpoint" if the tool changes direction along the X or Y axis, or a "start-stop point" if the tool starts or stops moving at a point along the X or Y axis.

One preferred embodiment monitors the alternating currents powering and controlling the motors of a CNC machine by measuring current or voltage driving each motor, analyzing the respective waveforms of the measured current/voltage, identifying breakpoints, and counting alternating current cycles between consecutive breakpoints. The values of the counted cycles accumulate to form a set of values that is considered a feature of the manufactured part. Clustering a plurality of logs of manufactured parts according to such features allows identifying individual parts according to their respective clusters.

In another embodiment, the features are the measured time spans between breakpoints.

According a first aspect, there is provided a method for feature extraction of a part manufactured by a machine, the machine including a plurality of motors for driving a tool along a toolpath. The method includes, for each motor of one or more selected motors of the plurality of motors, measuring an alternating current powering the motor. Such measurement may be performed by probes and meters measuring current flow or voltage. According to the measured alternating current, the method further includes detecting toolpath breakpoints, and counting alternating current cycles between consecutive breakpoints. The method further includes recording a set of the counted alternating current cycles as a feature of the manufactured part.

The one or more selected motors may consist of one selected motor, and the feature extraction of the part is then by the one sequence of counted alternating current cycles associated with the one selected motor. Alternatively, the one or more selected motors may include at least two selected motors, and the feature extraction of the part is then by the at least two sequences of counted alternating current cycles associated with the at least two selected motors. The one or more selected motors may include all motors of the CNC machine, and then the feature extraction of the part is from the plurality of sequences of counted alternating current cycles associated with all motors of the CNC machine.

Measuring an alternating current may be made by measuring a single phase of the alternating current or by measuring at least two phases of the alternating current. The breakpoints may be toolpath turning points or toolpath start-stop points.

The one or more selected motors may include a first motor and a second motor, and the method may further include: (i) synchronously: detecting first motor breakpoints, and (ii) counting second motor alternating current cycles between consecutive first motor breakpoints; and recording a sequence of the counted second motor alternating current cycles as a feature of the part. The first motor breakpoints may be toolpath start-stop points.

According to another aspect, there is provided a method for feature extraction of a part manufactured by a machine, the machine including at least a first motor and a second motor. The method includes: for the first motor: (i) measuring an alternating current powering the first motor, and (ii) according to the measured alternating current powering the first motor: detecting first motor breakpoints; for the second motor: (i) measuring an alternating current powering the second motor, and counting alternating current cycles powering the second motor that occur between consecutive breakpoints of the first motor; and (ii) recording a sequence of the counted second motor alternating current cycles as a feature of the part. The first motor breakpoints may be toolpath start-stop points and the first motor may be a spindle motor.

According to still another aspect, there is provided a method for identifying parts manufactured by a machine, the machine having a plurality of motors for driving a tool along a toolpath. The method including: manufacturing a plurality of parts, wherein, for each part of the manufactured parts: (A) for each motor of one or more selected motors of the plurality of motors: (i) measuring an alternating current that powers the motor, and (ii) extracting features of the part according to the measured alternating current that powers the motor; and (B) clustering the plurality of parts according to the extracted features of each part. In this method, the extracting features of the part may be by detecting breakpoint in the measured alternating current and counting alternating current cycles between consecutive breakpoints. The breakpoints may be toolpath turning points or toolpath start-stop points. Measuring the alternating current may be by measuring a single phase of the alternating current or by measuring at least two phases of the alternating current.

Measuring the alternating current may be made by current flow probes or by voltage probes.

The description of the clustering process in this embodiment will be better understood by using the terms defined above for "session" and "log".

A session of a machine is the time dedicated by the machine for manufacturing a single part. The starting and the ending of a session are detectable by processors in one of multiple possible ways, such as the following:
A sensor on the machine that is automatically activated when a session ends, such as a sensor on a machine door used for off-loading of a finished part or loading of a new workpiece.

An idle period in which the signals from the machine indicate that the machine is not active for a pre-defined period.

A switch activated by a worker, intentionally indicating that he finished a part and is starting a new part.

A log of a session is the sequence of signals, representing a sequence of operations of the motors during the session, as, for example, deterministically dictated by the sequence of machine commands (for example, G-code, which is explained at https://en.wikipedia.org/wiki/G-code) controlling the manufacturing of a part.

Clustering the features calculated from the logs is the procedure of grouping the logs of the machine into groups, so that the logs within each group are similar or identical to each other, while being significantly different from the logs in other groups.

Clustering logs can be performed using conventional methods of pattern recognition, if in the parameter space of the clusters there is a calculatable distance, the term "distance" here referencing the multidimensional distance between points in multidimensional space. If the logs of different instances of manufacturing the same part are close to each other (have a small distance between them) and the logs of instances of different parts are relatively far from each other (have a large distance between them) then the logs are clustered according to the manufactured part. A system can then calculate the distances between any two logs and create a distance matrix for the list of clusters, and then known algorithms, such as DBScan (described in DBSCAN - Wikipedia, https://en.wikipedia.org/wiki/DBSCAN) can be used to extract the features that best classify logs into clusters.

The features that describe a log, in the present embodiment, can be pre-determined sequences of G-code commands, as reconstructed from the currents measured on the motors. By way of example, the following sequence of three commands can be defined as a feature of a log:
Rotation of spindle motor #1 at 100 rpm for 1000 rotations.
Simultaneous rotation of X positional motor at 20 rpm for 24 rotations.
Simultaneous rotation of Y positional motor Y1 at 15 rpm for 76 rotations.

This sequence will be present in every log of manufacturing the same part. It may also be present in the logs of manufacturing other parts, so a single feature is not necessarily sufficient for clustering. Fortunately, a log may comprise tens and hundreds of features. Nonetheless, when the machine is manufacturing the same part, essentially all of the features will be present. Thus, the clustering will be reliable, and the clusters will be concentrated and well separated from each other.

Two sequences can be identical to each other, or they can be different from each other. If two logs are described as a list of features, there may be some features that can be found in both lists. The number of exclusive features in the lists (features that are present in one list but not in the other) can serve as a measure of the distance between the two logs. If the logs have exactly the same list of features, the distance between them will be zero. These distances can be used to fill the distance matrix between the logs and also in the clustering algorithm for clustering them.

The features can be selected to be short or long sequences. Short sequences may be less unique but more in quantity. Long sequences may be less in quantity but more unique.

Once the clusters are discovered, a user can associate each cluster with a catalog number of a part, and then the system can recognize individual newly-manufactured parts after the new parts' features are calculated. Such is one of the basic purposes of the present invention.

A different and more general embodiment of the present invention is a system for identifying manufactured parts in either an automatic- or manually-operated workstation. In this embodiment, the workstation may use one or more electric machines to drive tools that perform work to manufacture a part. The machines can be DC motors or AC motors. The state of a machine (active or inactive) and the intensity of its operation can be sensed non-intrusively by sensors that sense the current powering of a particular machine of the workstation, the vibration of the machine, the temperature of the machine, the electromagnetic field radiated by the machine, or the light emitted by the machine. The term "machine" encompasses both machines that use motors and electric machines that do not use motors, such as a welding machine or a UV curing lamp, and machines that use motors to ventilate the machines and not for providing power to a cutting tool. If the machine uses more than one motor, each motor of the machine can be considered "a machine" in itself.

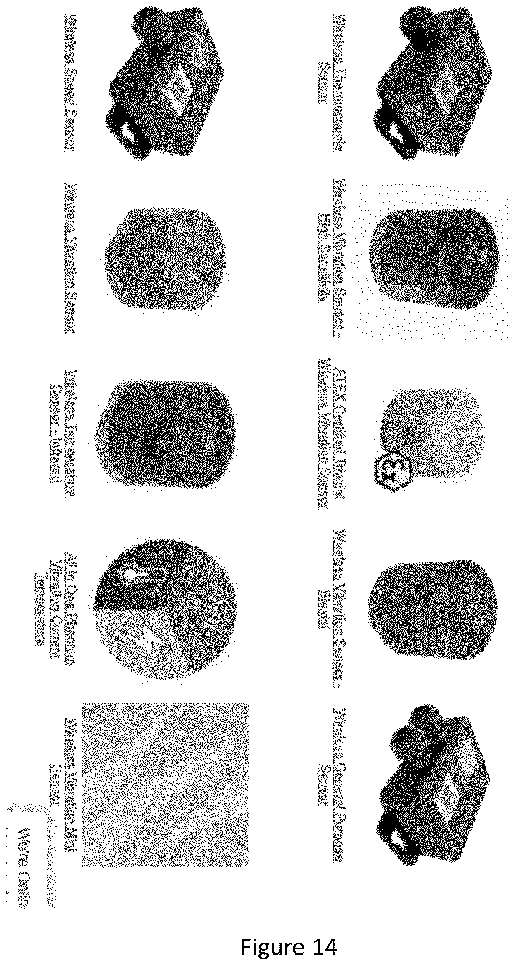

According to this embodiment, sensors are attached to some or all of the machines. The sensor can be a current sensor, a voltage sensor, a vibration sensor, a temperature sensor, an audio sensor (microphone), a light sensor, or a sensor of any other physical property of the motor that indicate the state of the motor or the intensity of its operation. The sensor can transmit the sensed signal via a wire or wirelessly. Sensors of the above type can be obtained, for example, from Erbessd Instruments, Queensbury, New York. Such sensors can be seen in Top 10 Wireless Vibration Sensors - CM & Industrial Automation Erbessd (erbessd-instruments.com) and are shown in Figure 14.

The signals from the sensors are transmitted to a processor where they are digitized and recorded to provide for each manufactured part the log of operation of the workstation in terms of the sequence of activity of the machines. If the workstation manufactures identical parts according to a prescribed procedure of operations, it is expected that the logs of operation of the tools will be essentially repetitive. If the workstation is operated manually by a worker, it is expected that there will be some deviations between the logs of manufacturing the same part due to differences in worker style, experience, fatigue and/or work breaks.

Logs can be compared to each other so that their similarity can be quantified. Logs can be compared by some of the following parameters that can easily be deduced from the sensor signals:
The order of activating the tools
The duration of activating the tools
The speed in which the tools are working when activated
The simultaneity of activating pairs of tools

The similarity of two logs can be quantified according to these and similar parameters that can be derived from the logs of the machines.

The comparison of the similarities of logs is designed to tolerate the differences in logs that are typical to an industrial workstation. Example differences include:
Differences between productivity of different workers, reflected in the timing of machine operations.
Breaks that a worker may take during the working shift.
Breaks in operation of machines for changing consumables, such as cutting disks in a disk-cutter or electrodes in a welding machine.
Increased or reduced operation times of certain machines due to random deviations in the material entering the workstation.

The similarity between two logs can be calculated by comparing the sequences of starting and stopping the machines producing the data for the logs, and by comparing parameters that reflect the time-behavior of the signals of a given machine in the execution of its activities. These parameters can be, for example, the coefficients of a polynomial approximation of the signal during each period of operation.

In a preferred embodiment of the invention, the system grades a log based on the activity of the machines monitored in the log. Such a grade can represent features of managerial significance of a given step in manufacturing such as any of the following:
Time to complete a manufacturing step.
Amount of power consumed during a manufacturing step.
Amount of amortization of certain machines during a manufacturing step. (Amortization is measured by the power consumed by the motor guiding a tool. The power is indicative of the resistance of a material to the cutting being performed. Accordingly, the power is is directly related to the amortization.)

Such features can serve the manufacturing organization for managerial purposes, such as for any of the following:
Comparing the performances of different workers, if applied to repeated logs of manufacturing the same part.
Comparing the performance of a given worker, if applied to logs of manufacturing the same part in different environmental situations.
Estimating the cost of manufacturing when using different alternative logs for manufacturing the same part, and
Optimizing and manufacturing by correlating quality of manufactured parts and the logs of their manufacturing

### Brief Description of The Drawings

The present invention will be understood and appreciated more fully from the following detailed description, taken in conjunction with the drawings, in which:
Fig. 1A is a simplified block diagram describing a general system that supplies electrical power to a CNC machine according to embodiments of the present invention;
Fig. 1B is a simplified block diagram describing an exemplary system that supplies electrical power to a CNC machine according to embodiments of the present invention;
Figs. 2A-2C, 3A-3C and 4A-4C are graphs illustrating exemplary waveforms of current measured according to exemplary embodiments of the present invention;
Fig. 5 is a flowchart describing a process for identifying manufactured parts according to an embodiment of the present invention;
Figs. 6A-6B are flowcharts describing exemplary processes of feature extraction;
Figs. 7A-7C are exemplary number sequences representing part features according to embodiments of the present invention;
Figures 8A-8B show a simplified block diagram of an embodiment of the invention for general workstations;
Figures 9A - 13C show exemplary signals recorded from sensors;
Figure 14 shows examples of conventional wireless sensors;
Figure 15 show a simplified flowchart of clustering parts; and
Figure 16 show a simplified flowchart of recognizing parts.

### Detailed Description

### COUNTING ALTERNATING CURRENT CYCLES BETWEEN BREAKPOINTS

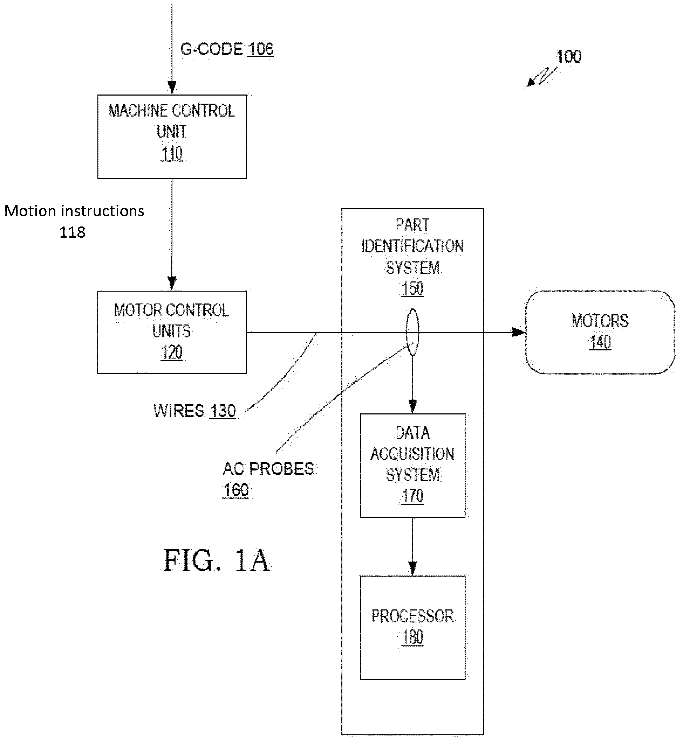

Reference is made to Fig. 1A, which depicts a system 100 of supplying power to a CNC machine's motors for energizing and controlling a tool for moving along a toolpath in order to create a part. Machine control unit 110 is a computerized unit that receives G-code 106 that describes the part's manufacturing process according to a well-known standard. Machine control unit 110 sends motion instructions 118 to motor control units 120. Motor control units 120 are connected to motors 140 with wires 130 to supply alternating current for individually powering and controlling each of motors 140 so that the tool moves along the toolpath according to the G-code 106. Part identification system 150 includes AC current probes 160, which measure current flow or voltage to be recorded by data acquisition system 170. The recorded data is analyzed by processor 180 for feature extraction and clustering toward part identification as described in the following drawings and accompanying description.

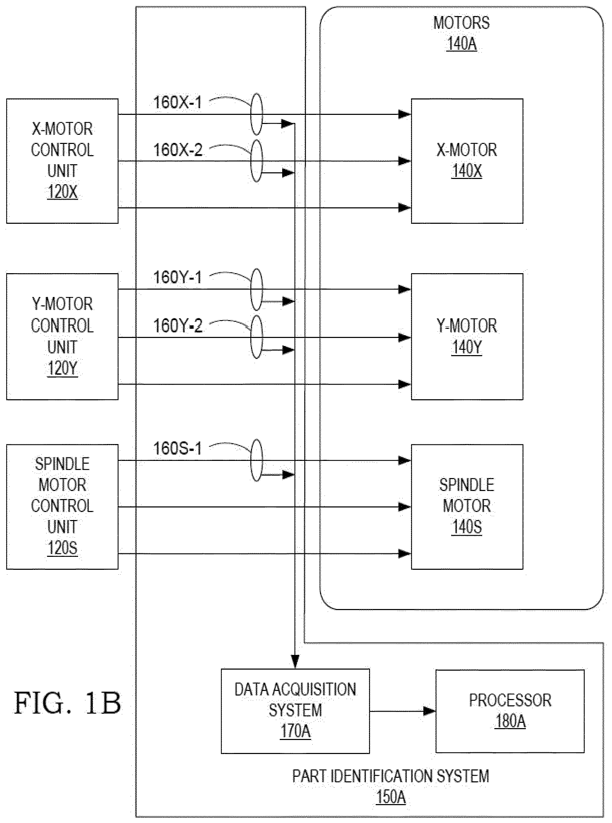

Fig. 1B describes an embodiment that uses motors 140A that include three 3-phase motors 140X, 140Y and 140S that are energized and controlled by their respective control units 120X, 120Y and 120S. X-motor control unit 120X and Y-motor control unit 120Y control the tool moving along the X and Y axes, respectively, while spindle motor control unit 120S controls the rotation of the part around the Z axis. The exemplary part identification system 150A measures voltage or current flow of two out of the three alternating current phases powering the motors, as demonstrated by AC probes 160X-1, 160X-2, 160Y-1 and 160Y-2 that may be current flow or voltage probes, which are recorded by data acquisition system 170A and analyzed by processor 180A, for feature extraction and clustering toward part identification.

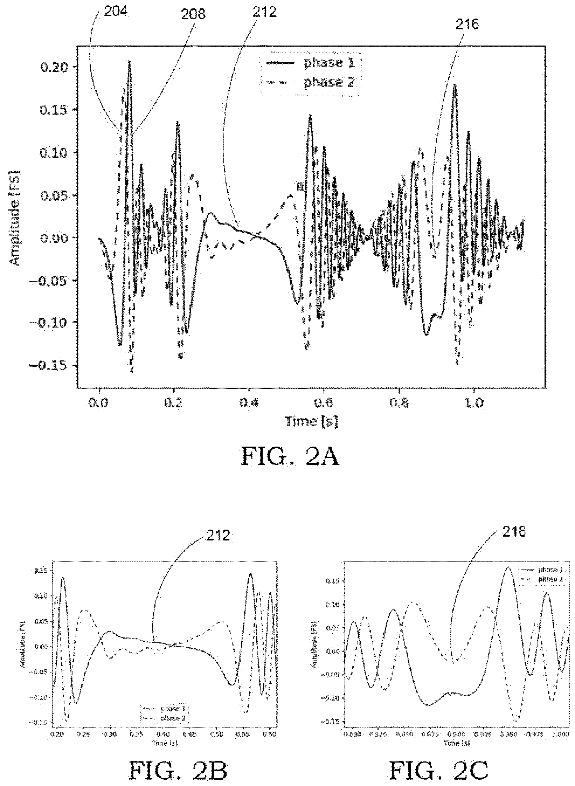

Figs. 2A-2C illustrate an exemplary signal segment measured by AC probe 160X-1 and AC probe 160X-2, recorded by data acquisition system 170A and analyzed by processor 180A of Fig. 1B, in the course of manufacturing an exemplary part. In the exemplary 3-phase X motor of Fig. 1B, the phases are spaced 120 degrees from each other. In this example, if phase 1 is leading, the X motor is rotating in one direction while if the phase 2 is leading, the motor is rotating in the opposite direction. Fig. 2A shows in points 204 and 208 phase 2 leading. Point 212 is a breakpoint, after which phase 1 is leading, until another breakpoint 216 where phase 2 starts leading again. The corresponding physical phenomenon causing these waveforms is that the motor direction changes at times corresponding to points 212 and 216. Processor 180A receives the signal shown in Fig. 2A from data acquisition system 170A, and analyzes the signal to identify breakpoints 212 and 216 and then counts the number of alternating current cycles therebetween. Figs. 2B and 2C show magnified views of breakpoints 212 and 216, respectively.

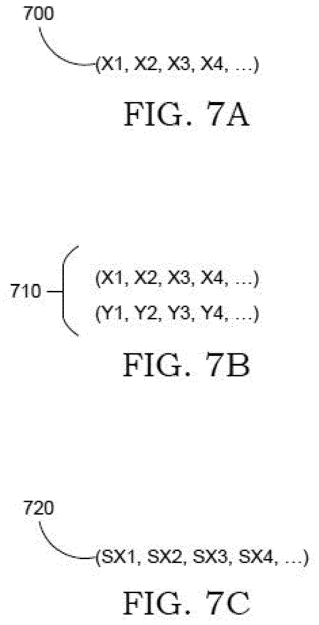

The number of alternating current cycles between consecutive breakpoints such as 212 and 216 along the entire part manufacturing accumulate into a sequence of counted cycles, or simply "counts," such as the sequence of counts 700 in Fig. 7A including counts X1, X2, X3, X4.... As the counted number of cycles between consecutive breakpoints represent the distance travelled by the tool, the count represents some measurement to associate with the manufactured part, and it is therefore indicative of the part and suitable for use as a feature.

Sometimes, especially with different parts that are similar in one dimension yet different in another dimension, it may be advantageous to identify breakpoints, count the number of alternating current cycles between consecutive breakpoints and form a sequence of counts for each motor of a plurality of motors, where each sequence serves as a feature of the manufactured part. Fig. 7B demonstrates features 710 that include a sequence X1, X2, X3, X4... and a sequence Y1, Y2, Y3, Y4... derived by data acquisition system 170A and processor 180A with respect to the currents that energize and control X-motor 140X and Y-motor 140Y, respectively.

It will be noted that the breakpoints of Figs. 2A-2C are turning points, where the toolpath changes direction in a specific degree of freedom, e.g., in the X and/or Y direction. For detecting such turning points, measuring the current flow or voltage of two phases, as shown in Fig. 1B, is helpful by detecting the leading phase, as explained above with reference to Fig. 2A.

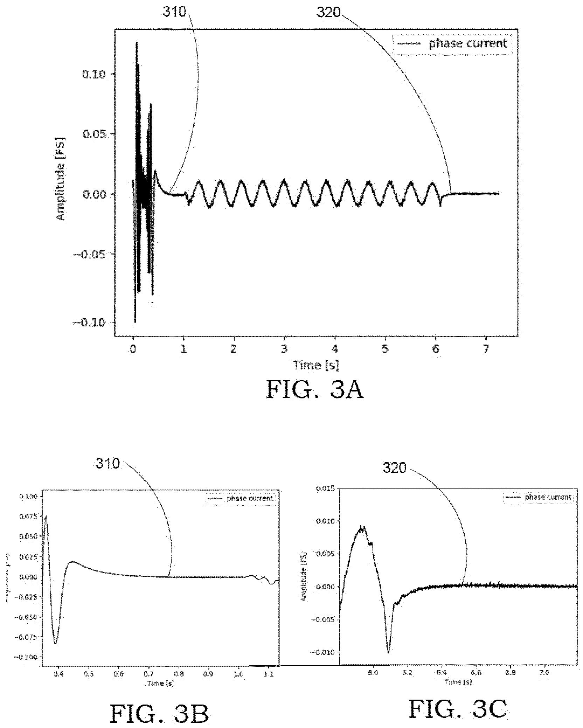

Figs. 3A-3C pertain to detecting breakpoints that are start-stop points, in which case measuring a single phase of the alternating current powering the motor(s) may be sufficient, and AC probe 160X-2 and AC probe 160Y-2 become redundant. Start-stop point 310 of Fig. 3A, magnified in Fig. 3B, shows a flat segment of zero alternating current where the tool momentarily stops moving in a certain degree of freedom, such as the X axis. Start-stop point 320 of Fig. 3A, magnified in Fig. 3C, shows the next start-stop point. Counting the alternating current cycles between points 310 and 320, and accumulating such counts into sequences of counts between consecutive breakpoints, may be used as a feature of the manufactured part, similar to using breakpoints that are tuning points as in Figs. 2A-2C and Figs. 7A-7B described above.

It will be noted that when recording two or more count sequences that pertain to different motors and degrees of freedom, as demonstrated by the two sequences of Fig. 7B, each sequence may be treated as a feature of the manufactured part independently of other sequences. However, since the manufacturing process involves strict synchronization of the tool motion along the different degrees of freedom, correlation between breakpoints detected in one motor and counts alternating current cycles in another motor may also be used as a feature of the manufactured part.

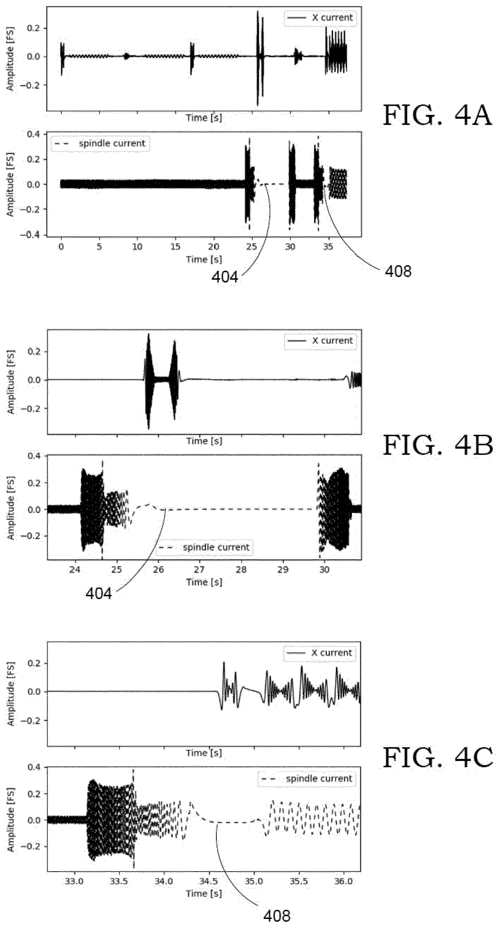

Figs. 4A-4C show feature extraction of a part manufactured by the motors 140A of Fig. 1B, wherein start-stop points of spindle motor 140S are used as breakpoints, and alternating current cycles powering X-motor 140X are counted between the spindle motor breakpoints. The measured single-phase currents of the X and spindle motors are shown in Figs. 4A-4C, with the X and spindle currents shown in the top and bottom parts of each figure, respectively. Fig. 4A shows two breakpoints 404 and 408 that are start-stop points of the spindle motor. In the embodiment of Figs. 4A-4C, the X-current cycles between consecutive spindle-current breakpoints are counted and accumulate into a sequence of counts, demonstrated by feature 720 of Fig. 7C. Figs. 4B and 4C are magnified views of the X and spindle currents next to breakpoints 404 and 408, respectively.

### PROCESS OF FEATURE EXTRACTION AND CLUSTERING

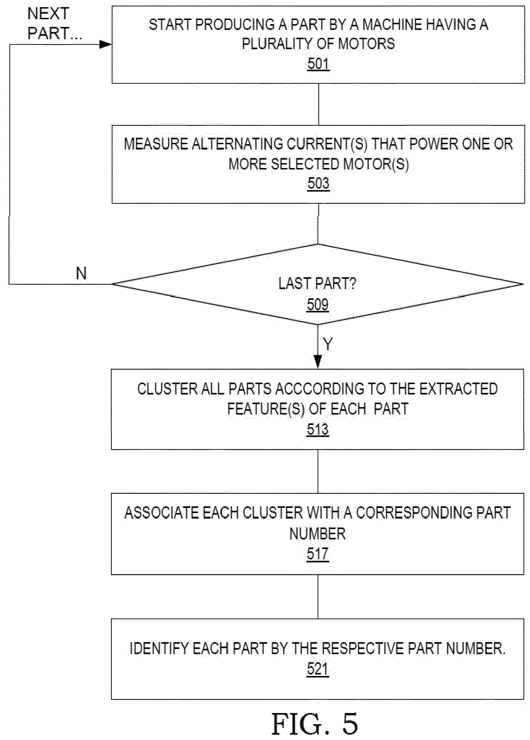

Fig. 5 describes a process of identifying manufactured parts by measuring alternating currents that power and control motors of a CNC machine (provided by the sensors in real time, or read from a recording of the log off-line). In step 501 a CNC machine having a plurality of motors starts manufacturing a part. In step 503, voltage or current probes, as demonstrated in Fig. 1B, measure the alternating current(s) that power and control one or more selected motors. In some cases, measuring the current powering a single selected motor may be sufficient for the feature extraction described below, while in other cases, especially with different parts that are similar in a certain dimension, two or more selected motors may be needed for effectively distinguishing between similar yet different parts. In step 505 the current(s) measured in step 503 are analyzed to extract feature(s) of the manufactured part. Step 509 checks whether the last part of a plurality of parts has been manufactured, and if not, the next part of the plurality of parts starts being manufactured and feature extraction is performed again in steps 503-505. When the end of manufacturing of the plurality of parts is determined by step 509, step 513 clusters the signals of all manufactured parts according to similarities among the feature(s) extracted for each part in step 505. In step 517 each cluster of similar features is associated with a part number, which may involve data entry by a human operator or may be determined automatically. One way for automatically determining a part is to associate the number of identical or similar clusters with the known number of identical parts made for each of the various different part types made according to the manufacturing plan, and in step 521 each manufactured part is marked according to its cluster, for example by engraving or labeling the part with the part number.

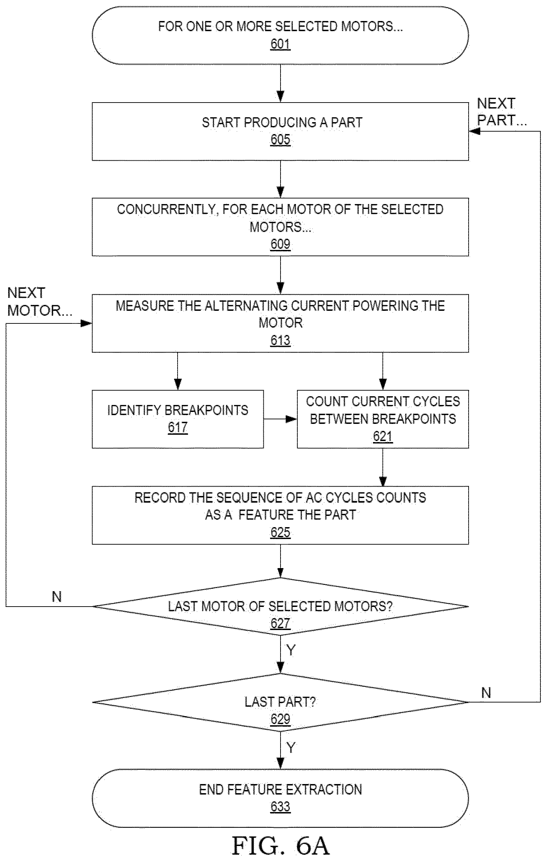

Fig. 6A depicts a process of feature extraction based on counting cycles of alternating current. In step 601 the process of feature extraction starts for one or more selected motors out of the plurality of motors powering and controlling a CNC machine. The number of motors may be selected according to the similarity of the different parts to be manufactured, as explained above with reference to Fig. 5. Step 605 starts the manufacturing of a part. Step 609 starts a concurrent process for each motor of the one or more selected motors. In step 613, the alternating current powering the motor is measured using current flow or indirectly by voltage probes over a known or constant resistance. Step 617 identifies toolpath breakpoints in the waveform formed by the measured alternating current, such as turning points demonstrated in Figs. 2A-2C or start-stop points demonstrated in Figs. 3A-3C, while step 621 counts alternating current cycles between consecutive breakpoints. Step 625 records the accumulated sequence of alternating current cycles counts as a feature of the manufactured part, as demonstrated by Figs. 7A and 7B. The process then repeats through step 627 for all selected motors and through step 629 for all manufactured parts, ending feature extraction for all manufactured parts in step 633, optionally ready for further clustering and part identification such as in steps 513-521 of Fig. 5.

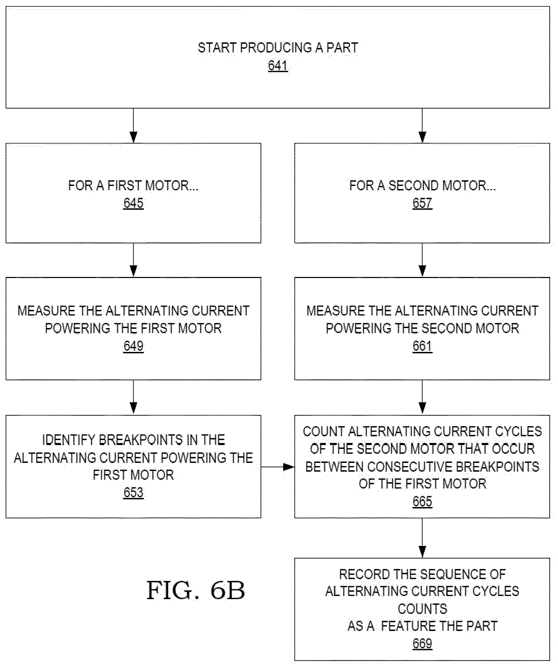

Fig. 6B shows feature extraction based on identifying breakpoints in a first motor while synchronously counting alternating current cycles in a second motor, as also demonstrated by Figs. 4A-4C and Fig. 7C. Step 641 starts the manufacturing of a part, followed by concurrent and synchronous steps for two different motors. In step 645 a first process starts for a first motor, so that in step 649 the alternating current powering the first motor is measured, for identifying, in step 653, breakpoints in the alternating current powering the first motor. Concurrently and synchronously with steps 645-653, step 657 starts, for a second motor that is different than the first motor, measuring the alternating current powering the second motor in step 661, followed by counting in step 665 alternating current cycles of the second motor that occur between consecutive breakpoints of the first motor. In step 669 the accumulated sequence of alternating current cycles counts of step 665, as demonstrated, for example, by Fig. 7C, is recorded as a feature of manufactured part.

Figs. 7A-7C demonstrate sequences of alternating current cycles counts between consecutive breakpoints used as features of manufactured parts, and were referenced throughout the description above.

The above specification describes embodiments where manufacturing is done according to pre-defined G-code. These embodiments are essentially deterministic (operate, not only repetitively, but essentially identically on like parts) and use a repetitive log of manufacturing. However, some manufacturing is done in manned workstations where a human worker activates and inactivates motors and machines. While such operation is essentially repetitive, it is not necessarily identically-repetitive, because there will probably be slight deviations from one part to another due to the randomness of the human operation based on individual work habits, and the following embodiments accommodate such randomness and still enable the identification of the manufactured part.

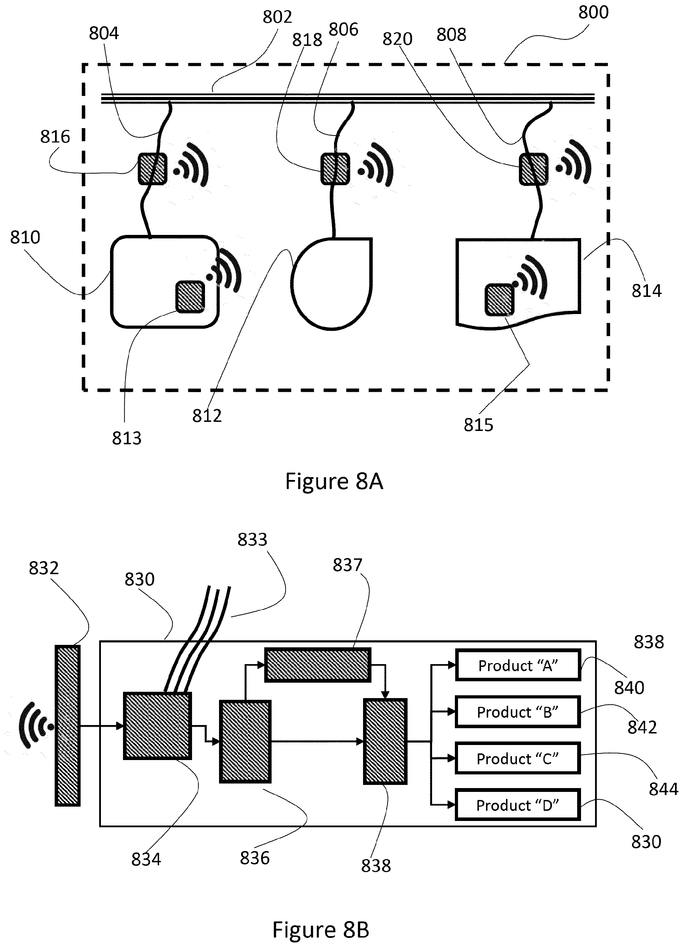

Attention is now called to figure 8A. A workstation 800, such as a mechanical workshop bench or a mechanically operated milling machine, has an electric power line 802 with one or more phases of power, feeding three electric machines 810, 812, 814 via one-phase or 3-phase power cables 804, 806, 806. Each power cable is equipped with a clip-on wireless current sensor 816, 818, 820 and two of the machines, 810, 814 are also equipped with attachable wireless vibration sensors 813, 815.

As the workstation performs an automatic or manual work of manufacturing a part, the machines are turned on and off and are applied to the part - cutting, pressing, welding, polishing etc. the part. The sensors transmit analog or digital signals representing their activity.

Attention is now called to figure 8B. The signals from the sensors are input to a processing unit 830. Wireless sensors are input via antenna 832 and wired sensors are input via wires 833. A digitizing and preprocessing unit 834 converts the signals into digital data, such as those indicating start time and stop time of operation of each machine, and determines parameters representing the pattern of the sensor signal along the time of operation, such as coefficients of a polynomial estimation of the sensor signal during time of activity.

The data is input to a processor 836 that receives the parameters representing the work session, uses the parameters to generate a parametric description of the session, and then sends the parametric descriptions to a processing and storage unit 837. A clustering processor 838 clusters the accumulated logs into clusters of similar sessions, that describe repetitive manufacturing of identical parts.

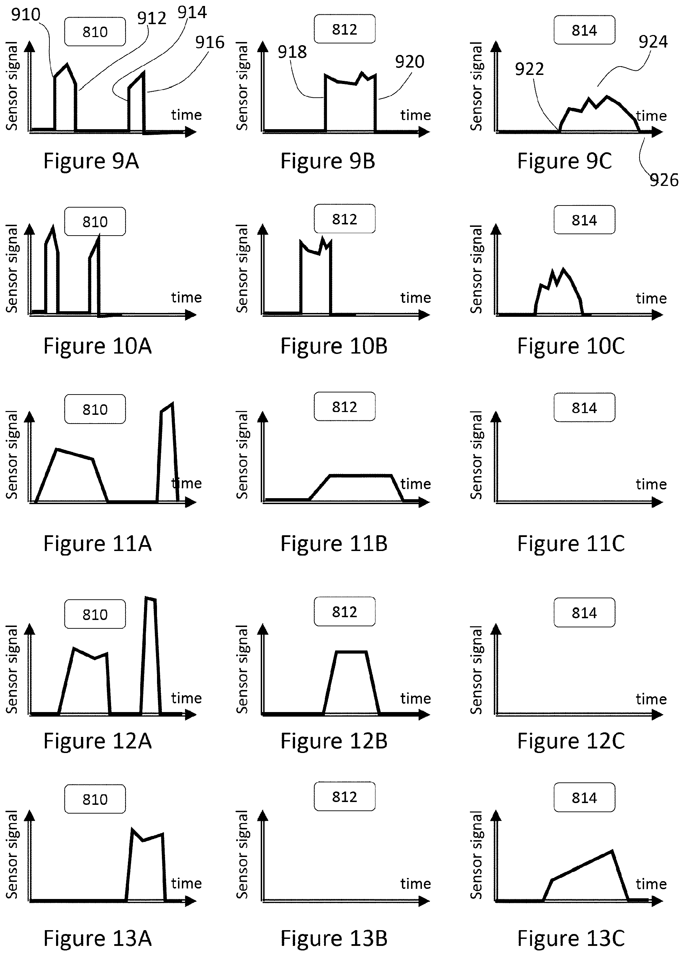

Attention is now called to figure 9A - 9C, representing a sensed signal from 3 machines such as 810, 812, 814 of figure 8A respectively.

Figure 9A indicates that machine 810 starts working at time 910 at a high intensity then stops abruptly at time 912 then starts again at time 914 and then stops again at time 916.

Figure 9B indicates that machine 812 starts at a later time 918, works for longer time, and then stops abruptly at time 920.

Figure 9C indicates that machine 814 starts at time 922, increases its intensity gradually then peaks at time 925, then falls down gradually and stops at time 926.

The time scale for all three machines in figures 9A - 9C is the same time scale.

Figures 10A - 10C show the signals collected from another session, from the same three machines working on another part that is identical to the part corresponding to figures 9A - 9C.

It is clearly observed that the patterns of figure 10 are essentially an accelerated version of the patterns of figure 9. This may indicate that the same manufacturing log was carried out at a higher speed.

Figure 11A - 11C show the signals collected from the same sensors of the same machines, when manufacturing another part that is different than the first part.

In figure 11A, it is shown that machine 810 was activated twice, the first period significantly longer than the second period, and its intensity in the first period was increasing and then decreasing gradually. Figure 11B shows that machine 812 was activated for a longer time, gradually-changing and with lower intensity than in log 9B. Figure 11C indicates that machine 814 was not activated at all in this log.

It is clearly observed that figures 11A - 11C represent a different part than figures 10 and 9.

Figures 12A - 12C represent a log that is a deviation of the log of figures 11A-11C, but it is still similar in essence: machine 810 activated twice and not abruptly, machine 812 activated once, and machine 814 not involved. This log clearly represents the same part as figures 11A - 11C.

Figure 13 shows a log that is significantly different than all previous logs. Machine 812 is not used and machines 810 and 814 are activated only once. This clearly represents a third manufactured part.

In a preferred embodiment of the invention, the logs are parametrized so that they can be clustered and recognized using conventional pattern recognition methods. Features that can be used for parametrizing the logs may include, for each of the machines, starting times, ending times, average intensity (amplitude), standard deviation of intensity, number of activations, overlapping of operation of machines, coefficients of polynomial approximation of the intensity during activation.

Conventional pattern recognition methods are used for feature extraction, clustering and recognition of manufactured parts. Non-limiting example pattern recognition methods are discussed at https://en.wikipedia.org/wiki/Pattern_recognition.

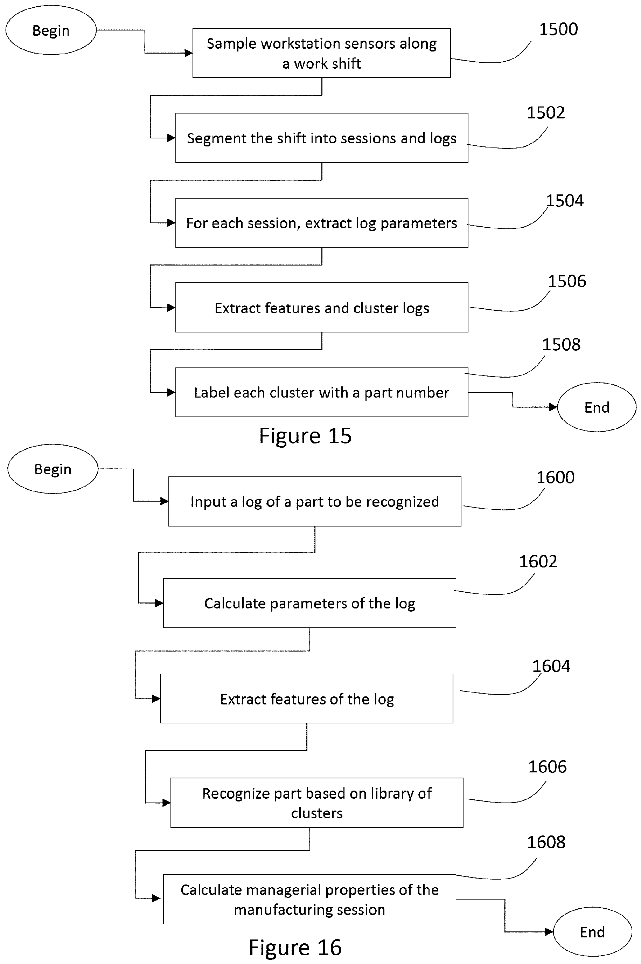

Attention is now directed to figure 15 showing a simplified flow chart of the preparation process of the present embodiment of the invention.

After installing sensors on the machines of a given workstation involved in the process of manufacturing, the workstation is operated normally during a work shift, and signals are sampled 1500. At the end of the shift, the record of the logs of the workstation taken during the shift is segmented 1502 into segments of signals sampled representing the manufacturing of individual parts. The segmentation may be executed manually, for example, by a human operator pressing a button to indicate "end of part manufacture", or may be executed automatically, for example, by detecting relatively long periods of time with negligible, if any, change in the signals sensed by the sensors on the machines (not necessarily inactivity of all machines, as some machines may be left to run while parts are changed).

The system then calculates 1504 a large number of pre-determined parameters of the session, as described above, including times of activating each machine and coefficients of polynomial approximation of the signals sensed by the sensors, if the signals change over time.

The system then applies 1506 conventional feature extraction procedures to extract features of the individual part-sessions to perform clustering of the sessions into clusters of corresponding to individual parts.

Finally, the system labels 1508 each cluster of part-sessions to obtain a legend for recognizing additional logs as representing specific manufactured parts.

Attention is now called to figure 16, showing a simplified flowchart of the process of recognizing parts. A new log of manufacturing, segmented from a new record of a shift of work of the workstation is input 1600 into the processing system. The segmentation divides the data into groups, each of which corresponds to the manufacture of a single separate part. Parameters of the log are calculated 1602 and features of the session are extracted 1604 according the results of the feature extraction process done in the clustering process, and the part is recognized 1606 by the distance between the features of the session to the features in the clusters using pattern recognition, such as KNN pattern recognition, as a non-limiting example.

After the part is recognized, the system can compare the log of the part to the average log of the cluster, and extract managerial properties of the session 1608 such as session duration, relative power consumption of the session, relative amortization of the cutting tools of machines (estimated based on the time the tool was active and the current that the motor guiding the tool consumed. The time that a cutting tool is used and the force that it applies to the workpiece determine the amortization), consumption of expendables, etc. Such properties may help management improve efficiency and reduce the costs of manufacturing.

Having thus described exemplary embodiments of the invention, it will be apparent that various alterations, modifications, and improvements will readily occur to those skilled in the art. Alternations, modifications, and improvements of the disclosed invention, although not expressly described above, are nonetheless intended and implied to be within spirit and scope of the invention. Accordingly, the foregoing discussion is intended to be illustrative only; the invention is limited and defined only by the following claims and equivalents thereto.

## Claims

1. A system for automatically recognizing a manufactured part, the system comprising:
a. at least one signal generating sensor associated with at least one machine used in manufacturing the part; and
b. one or more processors configured to extract features from the signals generated by the sensor; the one or more processors being configured to apply pattern recognition to the extracted features using features previously associated with the manufacturing of the part.

2. A system as claimed in claim 1, wherein
a. the at least one signal generating sensor is configured to sense a signal indicative of the activation of the at least one machine; and
b. the one or more processors is configured:
i. to record signals collected from sensors during a manufacturing session;
ii. to extract features from a log of signals recorded during machine activation in a manufacturing session;
iii. to cluster logs into recognizable patterns; and
iv. to identify a manufactured part by comparing its log to logs known to correspond to the part.

3. A system as in claim 2, wherein the sensors sense a signal representing at least one of current, voltage, power, temperature, vibration, sound, electromagnetic radiation and light.

4. A system as claimed in claim 2 or 3, wherein the sensors are operative to transmit data via a wired connection.

5. A system as claimed in claim 2 or 3, wherein the sensors are operative to transmit data via a wireless connection.

6. A system as claimed in any preceding claim, wherein the system is configured to calculate a managerial property of a log.

7. A system as claimed in claim 6, where the managerial property is selected from a list comprising power consumption, time of completion, machine amortization and consumption of expendables.

8. A method for identifying parts manufactured by a machine, the machine having a plurality of motors for driving a tool along a toolpath, the method comprising:
a. manufacturing a plurality of parts, wherein, for each part:
for each of selected motors of the plurality of motors:
(i) measuring an alternating current that powers the motor, and
(ii) extracting features of the part according to the measured alternating current that powers the motor; and
b. clustering the logs of the plurality of parts according to the extracted features of each part.

9. A method as claimed in claim 8, wherein the extracting features of the part is executed by detecting breakpoints in the measured alternating current and counting alternating current cycles between consecutive breakpoints.

10. A method as claimed in claim 9, wherein the breakpoints are toolpath turning points.

11. A method as claimed in claim 9, wherein the breakpoints are toolpath start-stop points.

12. A method as claimed in any one of claims 8 to 11, wherein the selected motors comprise at least two motors, and the features are derived using data from one motor indicating breakpoints and using data from the other motor indicating the number of its cycles measured during the time between the breakpoints.

13. A method as claimed in any one of claims 8 to 12, wherein the measuring an alternating current is executed by measuring a single phase of the alternating current.

14. A method as claimed in any one of claims 8 to 12, wherein the measuring an alternating current is executed by measuring at least two phases of the alternating current.
